# EUROPEAN PATENT APPLICATION

(11) **EP 4 376 509 A1**
(43) Date of publication of application: **29.05.2024**
(21) Application number: 21951165.6
(22) Date of filing: 26.07.2021
(51) Int. Cl.: H04W 64/00

(54) **METHOD AND APPARATUS FOR REPORTING POSITION INFORMATION OF TERMINAL DEVICE IN NON-TERRESTRIAL NETWORK**

(71) Applicant: Beijing Xiaomi Mobile Software Co., Ltd., Beijing 100085 (CN)
(72) Inventor: YANG, Xing, Beijing 100085 (CN)
(74) Representative: Kudlek, Franz Thomas
(86) International application number: PCT/CN2021/108473
(87) International publication number: WO 2023/004547

(57) **Abstract**

Embodiments of the present application disclose a method and apparatus for reporting a low-accuracy position of a terminal device in a non-terrestrial network (NTN), a terminal device, and a storage medium, capable of being applicable to an NTN network system. The method comprises: a terminal device obtaining its own position information, and reporting the position information to a network side device. According to the present application, by reporting the position information of the terminal device to the network side device, a network side provides appropriate services for the terminal device according to the position reported by the terminal device, comprising the selection of a local operator core network node, and thus normal communication between the terminal device and an NTN network can be ensured.

## Description

### TECHNICAL FIELD

The disclosure relates to the field of communication technology, and more particularly to a method and an apparatus for reporting position information of a terminal in a Non-Territorial Network (NTN).

### BACKGROUND

In a Non-Territorial Network (NTN), an antenna of a base station can be located on a high-altitude platform or a satellite, e.g., at altitudes of more than 10 kilometers to as high as 10 thousands kilometers above the ground or in the outer space. Each NTN cell can cover a large area, e.g., an area of tens of kilometers to hundreds of kilometers in diameter depending on the height of a transmitting antenna, which may encompass several different countries or regions. In order to ensure normal communication between a terminal and the NTN, the NTN needs to provide appropriate services for the terminal according to the regulations of a country where the terminal is located, including, for example, selecting a core network node of a local operator.

### SUMMARY

The embodiments of the disclosure provide a method for reporting position information of a terminal in a Non-Territorial Network (NTN) and an apparatus for reporting position information of a terminal in a NTN, which can be applied to NTN communication. By reporting position information of the terminal to a network device, the network device can provide suitable services for the terminal according to a position reported by the terminal. The services may include, for example, selecting a core network node of a local operator, so that normal communication between the terminal and the NTN can be ensured.

According to a first aspect of embodiments of the disclosure, a method for reporting position information of a terminal in a NTN, performed by the terminal, is provided. The method includes:
obtaining position information of the terminal; and reporting the position information to a network device.

In this technical solution, by reporting the position information of the terminal to the network device, the network device can provide suitable services for the terminal according to the position reported by the terminal. The services may include, for example, selecting a core network node of a local operator, so that normal communication between the terminal and the NTN can be ensured.

In an implementation, the position information includes any one of: an area ID, offset position information, and an anchor ID.

In this technical solution, the terminal may report privacy-removed position information to the network device. For example, the terminal may report low-precision position information of the terminal, such as an ID of an area in which the terminal is located, offset position information, or an anchor ID, to prevent the privacy of the terminal from being violated.

In a possible implementation, obtaining the area ID of the terminal includes: obtaining a geographical coordinate of the terminal; obtaining a length and a width of an area; and obtaining the area ID of the terminal according to a longitudinal length of the geographical coordinate, a latitudinal length of the geographical coordinate, and the length and the width of the area.

Optionally, obtaining the area ID of the terminal according to the longitudinal length of the geographical coordinate, the latitudinal length of the geographical coordinate, and the length and the width of the area includes: obtaining a first value according to the longitudinal length of the geographical coordinate and the length of the area; obtaining a second value according to the latitudinal length of the geographical coordinate and the width of the area; and obtaining the area ID of the terminal according to the first value and the second value.

Optionally, the geographical coordinate is a relative geographical coordinate, and obtaining the geographical coordinate of the terminal includes: obtaining an absolute geographical coordinate of the terminal; and obtaining a relative geographical coordinate of the terminal with respect to an origin according to the absolute geographical coordinate, in which the origin is an absolute geographical coordinate configured by the network device.

In this technical solution, the ID of the area where the terminal is located can be calculated according to the length and the width of the area, and the longitudinal length and the latitudinal length of the geographical coordinate of the terminal, and the area ID is reported to the network device as the position of the terminal, to prevent the real and accurate position of the terminal from being leaked, and prevent the privacy of the terminal from being violated.

In an implementation, the method further includes: in response to a change in the area ID of the terminal, reporting an updated area ID to the network device.

Optionally, in response to the change in the area ID of the terminal, reporting the updated area ID to the network device includes: in response to the change in the area ID of the terminal lasting for a first preset time period, reporting the updated area ID to the network device.

In this technical solution, when the area ID of the terminal is changed, it indicates that the position of the terminal is changed. At this time, the updated area ID can be reported to the network, so that the network can obtain the latest position of the terminal in a timely manner, and provide suitable services for the terminal, so as to ensure normal communication between the terminal and the network.

In an implementation, obtaining the offset position information of the terminal includes: generating a first offset angle and a first offset length; and obtaining the offset position information of the terminal according to the first offset angle and the first offset length based on a polar coordinate system by taking an absolute geographical position of the terminal as a pole.

Optionally, generating the first offset angle and the first offset length includes: generating a first random angle between a first angle and a first maximum angle, and determining the first random angle as the first offset angle; and generating a first random length between a first length and a first maximum length, and determining the first random length as the first offset length.

In an implementation, obtaining the offset position information of the terminal includes: generating a second offset angle; and obtaining the offset position information of the terminal according to the second offset angle and a preset second offset length based on a polar coordinate system by taking an absolute geographical position of the terminal as a pole.

Optionally, generating the second offset angle includes: generating a second random angle between a second angle and a second maximum angle, and determining the second random angle as the second offset angle.

In a possible implementation, obtaining the offset position information of the terminal includes: generating an offset longitudinal length and an offset latitudinal length; and obtaining the offset position information of the terminal according to the offset longitudinal length, the offset latitudinal length and a geographical coordinate of the terminal.

Optionally, generating the offset longitudinal length and the offset latitudinal length includes: generating a second random length between a second length and a second maximum length, and determining the second random length as the offset longitudinal length; and generating a third random length between a third length and a third maximum length, and determining the third random length value as the offset latitudinal length.

In an implementation, the method further includes: in response to a change in a position of the terminal and a distance between updated position information and position information reported last time being greater than a threshold, reporting the updated position information.

In a possible implementation, in response to the change in the position of the terminal and the distance between the updated position information and the position information reported last time being greater than the threshold, reporting the updated position information includes: in response to the change in the position of the terminal and the distance between the updated position information and the position information reported last time being greater than the threshold for a second preset time period, reporting the updated position information to the network device.

In an implementation, obtaining the anchor ID of the terminal includes: calculating a distance between the terminal and each of at least one anchor, respectively; obtaining an anchor with a minimum distance to the terminal from the at least one anchor; and determining an anchor ID of the anchor with the minimum distance to the terminal as the anchor ID of the terminal.

In a possible implementation, the method further includes: reporting a distance between the anchor with the minimum distance to the terminal and the terminal to the network device.

In a possible implementation, the method further includes: in response to a change of the anchor with the minimum distance to the terminal, reporting an updated anchor ID to the network device.

Optionally, in response to the change of the anchor with the minimum distance to the terminal, reporting the updated anchor ID to the network device includes: in response to the change of the anchor with the minimum distance to the terminal and the terminal lasing for a third preset time period, reporting the updated anchor ID to the network device.

In this technical solution, the ID of the anchor with the minimum distance to the terminal can be used as the position of the terminal and reported to the network device, so that the network can provide appropriate services according to the different positions of the terminal, to prevent the real and accurate position of the terminal from being leaked, and prevent the privacy of the terminal from being violated.

In an optional implementation, reporting the position information to the network device includes: reporting the position information to the network device based on control information of the network device; in which the control information of the network device includes any one or more of: a position reporting indication sent by the network device to the terminal via a dedicated signaling; a position reporting indication carried in a system broadcast by the network device; periodically reporting position information configured for the terminal by the network device through a dedicated signaling; and an area range provided by the network device in a system broadcast or a dedicated signaling.

According to a second aspect of embodiments of the disclosure, a method for reporting position information of a terminal in a NTN, performed by a network device, is provided. The method includes: receiving position information reported by the terminal.

In an implementation, the position information at least includes any of: an area ID, offset position information, and an anchor ID.

In an implementation, receiving the position information reported by the terminal includes: sending control information of the network device to the terminal; receiving position information reported by the terminal based on the control information, in which the control information of the network device includes any one or more of: a position reporting indication sent by the network device to the terminal via a dedicated signaling; a position reporting indication carried in a system broadcast by the network device; periodically reporting position information configured for the terminal by the network device through a dedicated signaling; and an area range provided by the network device in a system broadcast or a dedicated signaling.

In this technical solution, by reporting the position information of the terminal to the network device, the network device can provide suitable services for the terminal according to the position reported by the terminal. The services may include, for example, selecting a core network node of a local operator, so that normal communication between the terminal and the NTN can be ensured.

According to a third aspect of embodiments of the disclosure, an apparatus for reporting position information of a terminal in a NTN is provided. The apparatus has an ability to implement part or all of the functions of the terminal in the method described in the first aspect. For example, the functions of the apparatus may include functions in some or all of the embodiments of the disclosure, or may include a function of independently implementing any embodiment of the disclosure. The functions can be implemented by hardware, or can be implemented by executing corresponding software using the hardware. The hardware or software includes one or more units or modules corresponding to the above functions.

In an implementation, a structure of the apparatus may include: an obtaining module, a transceiver module and a processing module. The obtaining module is configured to obtain position information of the terminal. The processing module is configured to support the apparatus to perform corresponding functions in the above method. The transceiver module is configured to support communication between the apparatus and other devices. The apparatus may further include a storage module coupled to the obtaining module, the transceiver module and the processing module, which is configured to store necessary computer programs and data for the apparatus.

As an example, the processing module may be a processor. The transceiver module may be a transceiver or a communication interface. The storage module may be a memory.

According to a fourth aspect of embodiments of the disclosure, an apparatus for reporting position information of a terminal in a NTN is provided. The apparatus has an ability to implement part or all of the functions of the network device in the method described in the second aspect. For example, the functions of the apparatus may include functions in some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, a structure of the apparatus may include: a transceiver module and a processing module. The processing module is configured to support the apparatus to perform corresponding functions in the above method. The transceiver module is configured to support communication between the apparatus and other devices. The apparatus may further include a storage module coupled to the transceiver module and the processing module, which is configured to store necessary computer programs and data for the apparatus.

As an example, the processing module may be a processor. The transceiver module may be a transceiver or a communication interface. The storage module may be a memory.

According to a fifth aspect of embodiments of the disclosure, a communication device is provided. The communication device includes: a processor. When the processor calls computer programs stored in a memory, the method described in the first aspect above is implemented.

According to a sixth aspect of embodiments of the disclosure, a communication device is provided. The communication device includes: a processor. When the processor calls computer programs stored in a memory, the method described in the second aspect above is implemented.

According to a seventh aspect of embodiments of the disclosure, a communication device is provided. The communication device includes: a processor and a memory having computer programs stored thereon. When the processor executes the computer programs stored in the memory, the communication device is caused to implement the method described in the first aspect above.

According to an eighth aspect of embodiments of the disclosure, a communication device is provided. The communication device includes: a processor and a memory having computer programs stored thereon. When the processor executes the computer programs stored in the memory, the communication device is caused to implement the method described in the second aspect above.

According to a ninth aspect of embodiments of the disclosure, a communication device is provided. The communication device includes: a processor and an interface circuit. The interface circuit is configured to receive code instructions and transmit them to the processor. The processor is configured to run the code instructions to cause the device to perform the method described in the first aspect above.

According to a tenth aspect of embodiments of the disclosure, a communication device is provided. The communication device includes: a processor and an interface circuit. The interface circuit is configured to receive code instructions and transmit them to the processor. The processor is configured to run the code instructions to cause the device to perform the method described in the second aspect above.

According to an eleventh aspect of embodiments of the disclosure, a communication system is provided. The system includes the apparatus of the third aspect and the apparatus of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium having instructions used by the terminal stored thereon is provided. When the instructions are executed, the terminal is caused to implement the method of the first aspect.

According to a thirteenth aspect of embodiments of the disclosure, a readable storage medium having instructions used by the network device stored thereon is provided. When the instructions are executed, the network device is caused to implement the method of the second aspect.

According to a fourteenth aspect of embodiments of the disclosure, a computer program product including computer programs is provided. When the computer programs are run by a computer, the computer is caused to implement the method of the first aspect.

According to a fifteenth aspect of embodiments of the disclosure, a computer program product including computer programs is provided. When the computer programs are run by a computer, the computer is caused to implement the method of the second aspect.

According to a sixteenth aspect of embodiments of the disclosure, a computer program is provided. When the computer program runs on a computer, the computer is caused to implement the method of the first aspect.

According to a seventeenth aspect of embodiments of the disclosure, a computer program is provided. When the computer program runs on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a structural diagram of a communication system provided by an embodiment of the disclosure.
FIG. 2 is a flowchart of a method for reporting position information of a terminal in a Non-Territorial Network (NTN) provided by an embodiment of the disclosure.
FIG. 3 is a flowchart of a method for reporting position information of a terminal in an NTN provided by an embodiment of the disclosure.
FIG. 4 is a flowchart of a method for reporting position information of a terminal in an NTN provided by an embodiment of the disclosure.
FIG. 5 is a flowchart of a method for reporting position information of a terminal in an NTN provided by an embodiment of the disclosure.
FIG. 6 is a flowchart of a method for reporting position information of a terminal in an NTN provided by an embodiment of the disclosure.
FIG. 7 is a block diagram of an apparatus for reporting position information of a terminal in an NTN provided by an embodiment of the disclosure.
FIG. 8 is a block diagram of an apparatus for reporting position information of a terminal in an NTN provided by an embodiment of the disclosure.
FIG. 9 is a schematic diagram of a communication device provided by an embodiment of the disclosure.

### DETAILED DESCRIPTION

The embodiments of the disclosure are described in detail below, examples of which are shown in the accompanying drawings. The same or similar numbers throughout represent the same or similar elements or elements having the same or similar functions. The embodiments described below with reference to the drawings are exemplary and are intended to explain the disclosure, but should not be construed as limiting the disclosure. In the description of the disclosure, unless otherwise stated, "/" means "or", for example, A/B means A or B. Moreover, "and/or" in this disclosure is only an association relation for describing associated objects, which indicates three relations. For example, A and/or B means that A exists alone, A and B both exist, and B exists alone.

In order to better understand a method for reporting position information of a terminal in a Non-Territorial Network (NTN) disclosed in the embodiments of the disclosure, a communication system used in the embodiments of the disclosure is firstly described below.

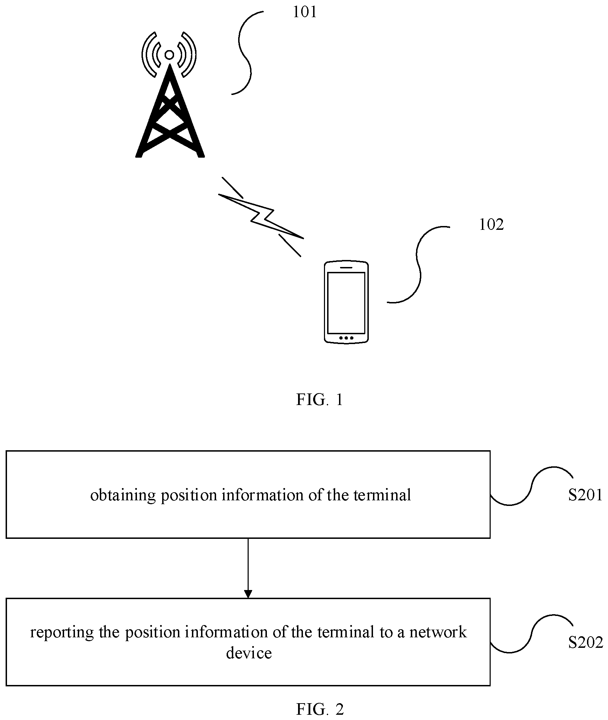

As illustrated in FIG. 1, FIG. 1 is a structural diagram of a communication system provided by an embodiment of the disclosure. The communication system may include, but is not limited to, a network device and a terminal. The number and form of devices shown in FIG. 1 are only for examples and do not constitute a limitation on the embodiments of the disclosure, and two or more network devices and two or more terminals may be included in practical applications. The communication system shown in FIG. 1 includes, for example, a network device 101 and a terminal 102.

It is noted that the technical solutions of the embodiments of the disclosure may be applied to a NTN communication system. The NTN is an important technology introduced by 5G, which provides wireless resources via satellites (or drones) rather than terrestrial base stations. The network device 101 in the embodiments of the disclosure may be an entity on a network side for transmitting or receiving signals. For example, the network device 101 may be an evolved NodeB (eNB), a transmission reception point (TRP), a next generation NodeB (gNB) in a new radio (NR) system, a base station in other future mobile communication systems or an access node in a wireless fidelity (Wi-Fi) system. The specific technology and specific device form used by the network device are not limited in the embodiments of the disclosure.

The terminal 102 in the embodiments of the disclosure is an entity on a user side for receiving or transmitting signals, such as a cellular phone. The terminal may also be referred to as user equipment (UE), a mobile station (MS), a mobile terminal (MT), and the like. The terminal can be a vehicle with a communication function, a smart car, a mobile phone, a wearable devices, a Pad, a computer with a wireless transceiver function, a wireless terminal in industrial control, a wireless terminal in self-driving, a wireless terminal in remote medical surgery, a wireless terminal in transportation safety, etc. The specific technology and specific device form adopted by the terminal are not limited in the embodiments of the disclosure.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new service scenarios emerge, the technical solutions provided by the embodiments of the disclosure are also applicable to similar technical problems.

A method for reporting position information of a terminal in a NTN, an apparatus for reporting position information of a terminal in a NTN, a communication device and a storage medium will be introduced in detail below with reference to the accompanying drawings.

As illustrated in FIG. 2, FIG. 2 is a flowchart of a method for reporting position information of a terminal in a NTN provided by an embodiment of the disclosure. It should be noted that the method is performed by the terminal. That is, the method of the embodiment of the disclosure may be described from the perspective of the terminal side. As shown in FIG. 2, the method may include, but is not limited to, the following steps.

At step S201, position information of the terminal is obtained.

In an implementation, the terminal can obtain low-precision position information. A precision of the low-precision position information is less than a precision of a positioning system in the terminal, so as to prevent the precise position of the terminal from being leaked.

In another implementation, the terminal can obtain privacy-removed position information. For example, after the terminal obtains a geographical coordinate through its own positioning system, the terminal processes the geographical coordinate through a privacy-removing process, to obtain the privacy-removed position information, which can prevent the precise position of the terminal from being leaked.

At step S202, the position information of the terminal is reported to a network device.

In an implementation, the terminal may report the position information to the network device based on control information of the network device. In some embodiments, the control information of the network device at least includes any one or more of: a position reporting indication sent by the network device to the terminal via a dedicated signaling; a position reporting indication carried in a system broadcast by the network device; periodically reporting position information configured for the terminal by the network device through a dedicated signaling; and an area range provided by the network device in a system broadcast or a dedicated signaling.

That is, the network device can send the position reporting indication to the terminal through the dedicated signaling, and the terminal reports its own position information after receiving the position reporting indication. Alternatively, the network device carries the position reporting indication in the system broadcast, and the terminal reports the position information after establishing a Radio Resource Control (RRC) connection. Alternatively, the network device can configure the terminal, through the dedicated signaling, to report the position information periodically, and the cycle can be provided by the network device to the terminal, so that the terminal periodically reports its own position information. Alternatively, the network device provides the area range in the system broadcast or the dedicated signaling. If a position of the terminal is within the area range, the terminal reports the position information. If the position of the terminal is not within the area range, the terminal does not report the position information. As an example, the area range can be defined by multiple coordinate points or by reference points and a radius, which is not specifically limited in the disclosure.

By implementing the embodiments of the disclosure, the position information of the terminal can be reported to the network device, so that the network device can provide appropriate services for the terminal according to the position reported by the terminal. The services may include, for example, selecting a core network node of a local operator, so that normal communication between the terminal and the NTN can be ensured.

In order to solve the problem of invasion of privacy of the terminal when the terminal reports its own position, the terminal may report the position of the terminal in a less accurate way. For example, a privacy-removed position may be reported to the network device. As an example, the position information reported to the network device may include, but is not limited to, any of: an area ID, offset position information, and an anchor ID. That is, the terminal may report the area ID of the terminal to the network device, to realize reporting of the position. Alternatively, the terminal may report the offset position information of the terminal to the network device, to realize reporting of the position. Alternatively, the terminal may report the anchor ID of the terminal to the network device, to realize reporting of the position.

It should be noted that the position information reported to the network device may be privacy-removed position information. The area ID, the offset position information, or the anchor ID are examples given to facilitate the understanding of the disclosure. In addition to the area ID, the offset position information, and the anchor ID, the privacy-removed position information may include other types of information, which is not specifically limited in the disclosure.

It should also be noted that, for different types of information reported as the position information to the network device, the way of obtaining the position information may be different. In the following, how the terminal reports its own position in the NTN is described under different cases where the position information includes the area ID, the offset position information, or the anchor ID, respectively.

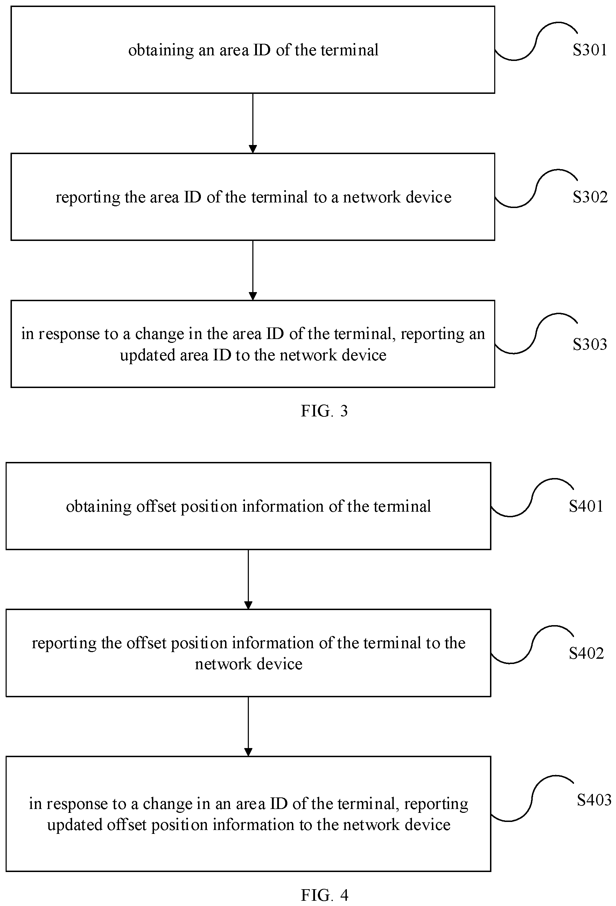

As illustrated in FIG. 3, FIG. 3 is a flowchart of a method for reporting position information of a terminal in a NTN provided by an embodiment of the disclosure. It should be noted that the method can be performed by the terminal. That is, the method of the embodiment of the disclosure may be described from the perspective of the terminal side.

In the embodiment of the disclosure, the position information includes an area ID, i.e., the area ID of the terminal is reported to the network device in the embodiment of the disclosure. As shown in FIG. 3, the method may include, but is not limited to, the following steps.

At step S301, an area ID of the terminal is obtained.

Optionally, the area ID may be obtained according to a length and a width of the area, and a longitudinal length and a latitudinal length of a geographical coordinate of the terminal. As an example, the geographic coordinate of the terminal is obtained, then the length and the width of the area are obtained, and the area ID of the terminal can be determined according to the longitudinal length of the geographical coordinate, the latitudinal length of the geographical coordinate, and the length and the width of the area.

In an implementation, a first value may be obtained according to the longitudinal length of the geographical coordinate and the length of the area. A second value may be obtained according to the latitudinal length of the geographical coordinate and the width of the area. The area ID of the terminal is obtained according to the first value and the second value. For example, the terminal may perform a quotient operation on the longitudinal length of the geographic coordinate and the length of the area, and an obtained quotient is determined as the first value. The terminal may also perform a quotient operation on the latitudinal length of the geographic coordinate and the width of the area, and an obtained quotient is determined as the second value. The first value and the second value together combined to serve as the area ID of the terminal.

It is noted that the geographical coordinate in the embodiment of the disclosure may be an absolute geographical coordinate or a relative geographical coordinate. In an optional implementation, when the geographic coordinate is a relative geographic coordinate, an absolute geographic coordinate can be used to calculate a relative geographic coordinate of the terminal relative to the network device, and the relative geographic coordinate is used as the geographic coordinate of the terminal.

For example, an implementation of obtaining the geographic coordinate of the terminal may include: obtaining an absolute geographical coordinate of the terminal; and obtaining a relative geographical coordinate of the terminal with respect to an origin according to the absolute geographical coordinate, in which the origin is an absolute geographical coordinate configured by the network device. That is, when using the relative geographical coordinate, the origin is an absolute geographical coordinate configured by the network device (e.g., a base station), and the terminal obtains the relative geographical coordinate relative to the origin according to the absolute geographical coordinate of the terminal.

In an optional implementation, when a result of the quotient operation on the longitudinal length of the geographic coordinate and the length of the area includes a remainder, and/or, when a result of the quotient operation on the latitudinal length of the geographic coordinate and the width of the area includes a remainder, the result of the quotient may be rounded up or rounded down.

As an example, the length and the width of the area can be identical. In addition, in some embodiments of the disclosure, the length and the width of the area may be configured by a network, may be specified by a protocol, or may be provided by pre-configuration. For example, the length and the width of the area can be configured by the network device, or can be specified by a communication protocol, or can be pre-configured by the terminal at the factory.

At step S302, the area ID of the terminal is reported to a network device.

In the embodiment of the disclosure, step S302 can be implemented in any manner in the embodiments of the disclosure, which is not limited in the embodiments of the disclosure and will not be described again.

By implementing the embodiments of the disclosure, the ID of the area where the terminal is located can be calculated by using the length and the width of the area, and the longitudinal length and the latitudinal length of the geographical coordinate of the terminal. The area ID serving as a position of the terminal is reported to the network device, to prevent the real and accurate position of the terminal from being leaked, and prevent the privacy of the terminal from being violated.

In order to further ensure normal communication between the terminal and the network, when the position of the terminal is changed, the terminal can report an updated area ID to the network device. In some embodiments of the disclosure, as shown in FIG. 3, the method may further include step S303.

At step S303, in response to a change in the area ID of the terminal, an updated area ID is reported to the network device.

That is to say, when the area ID of the terminal is changed, it means that the position of the terminal is changed. The terminal can report the updated area ID to the network device, to ensure normal communication between the terminal and the network.

Optionally, in response to the change in the area ID of the terminal lasting for a first preset time period, the updated area ID is reported to the network device. That is, when the area ID of the terminal is changed and the change continues for a period of time, the terminal reports the updated area ID to the network device.

A timer may be used to determine whether the change in the area ID continues for a period of time. In an implementation, the timer is started when the area ID of the terminal is changed. During the operation of the timer, if the terminal returns to the area ID of the area where the terminal is located before the timer is started, the timer is stopped. When the timer is expired, it means that the area ID is changed and the change in the area ID continues for a period of time, and the terminal may report its own position information again, so that the updated area ID can be reported to the network device, to ensure the normal communication between the terminal and the network.

As illustrated in FIG. 4, FIG. 4 is a flowchart of a method for reporting position information of a terminal in a NTN provided by an embodiment of the disclosure. It should be noted that the method can be performed by the terminal. That is, the method of the embodiment of the disclosure may be described from the perspective of the terminal side. The position information in the embodiment of the disclosure includes offset position information. That is, the offset position information of the terminal is reported to the network device in the embodiment of the disclosure. As shown in FIG. 4, the method may include, but is not limited to, the following steps.

At step S401, offset position information of the terminal is obtained.

Optionally, the offset position information may be obtained based on an offset and position information of the terminal. If the offset is generated in different ways, the way of obtaining the offset position information may vary.

In an implementation, the offset generated by the terminal may include a first offset angle and a first offset length. The terminal obtains the offset position information of the terminal based on a polar coordinate system method according to the first offset angle and the first offset length by taking an absolute geographical position of the terminal as an origin.

As an example, the terminal may generate a first random angle between a first angle and a first maximum angle, and determine the first random angle as the first offset angle. A first random length between a first length and a first maximum length is generated, and the first random length is determined as the first offset length. For example, the first angle is 0 degrees, the first maximum angle is 360 degrees, and the first length is 0, the terminal may generate an angle between 0 and 360 degrees randomly, and the angle is determined as the first offset angle. A value is randomly generated between 0 and the first maximum length, and the value is determined as the first offset length. The terminal may obtain the offset position information of the terminal according to the first offset angle and the first offset length based on the polar coordinate system method. A pole of the polar coordinate system is the absolute geographical position of the terminal. A polar axis of the polar coordinate system may be in a latitudinal direction, a latitude direction or other directions specified in a protocol. In addition, the first maximum length may be configured by the network, specified by a protocol, or provided by pre-configuration of the terminal at the factory.

In another implementation, the offset generated by the terminal may include a second offset angle. The terminal obtains the offset position information of the terminal according to the second offset angle and a preset second offset length based on a polar coordinate system by taking an absolute geographical position of the terminal as a pole.

As an example, the terminal may generate a second random angle between a second angle and a second maximum angle, and determines the second random angle as the second offset angle. For example, the second angle is 0 degrees and the second maximum angle is 360 degrees. The terminal may generate an angle between 0 and 360 degrees randomly, and determine the angle as the second offset angle. The terminal may obtain the offset position information of the terminal according to the second offset angle and the preset second offset length based on a polar coordinate system by taking the absolute geographical position of the terminal as a pole. The polar axis of the polar coordinate system may be in a latitudinal direction, a latitudinal direction or other directions specified in a protocol. In addition, the second offset length may be configured by a network, specified by a protocol, or provided by pre-configuration of the terminal at the factory.

In another implementation, the offset generated by the terminal may include an offset longitudinal length and an offset latitudinal length. The terminal obtains the offset position information of the terminal according to the generated offset longitudinal length, the offset latitudinal length, and a geographical coordinate of the terminal.

As an example, the terminal generates a second random length between a second length and a second maximum length, and determines the second random length as the offset longitudinal length. A third random length is generated between a third length and a third maximum length, and the third random length value is determined as the offset latitudinal length. For example, the second length is 0 and the third length is 0, the terminal may generate a value between 0 and the second maximum length randomly, and determines the value as the offset longitudinal length. The terminal may also generate a value between 0 and the third maximum length randomly, and determines the value as the offset latitudinal length. The geographical coordinate of the terminal, the offset longitudinal length and the offset latitudinal length are summed up. For example, a longitude coordinate in the geographical coordinate and the offset longitudinal length are added together, a latitude coordinate in the geographical coordinate and the offset latitudinal length are added together, and an array formed by the two summing results is used as the offset position information of the terminal.

In an optional implementation, the third maximum length may be a maximum width. The second maximum length and the maximum width may be the same. It is noted that the second maximum length and the third maximum length may be configured by the network, or specified by a protocol, or provided by pre-configuration of the terminal at the factory.

At step S402, the offset position information of the terminal is reported to the network device.

In the embodiment of the disclosure, step S402 may be realized in any manner in the embodiments of the disclosure, respectively, which is not limited in the embodiments of the disclosure and will not be repeated.

By implementing the embodiments of the disclosure, the offset angle and offset length generated by the terminal can be used to obtain the offset position information of the terminal according to the polar coordinate system by taking the absolute geographical position of the terminal as the pole, so that the offset position information can be reported to the network device as the position of the terminal, to ensure normal communication between the terminal and the network, and prevent the real and accurate position of the terminal from being leaked, and prevent the privacy of the terminal from being violated.

In order to further ensure the normal communication between the terminal and the network, when the position of the terminal is changed, the terminal may report updated offset position information to the network device. In some embodiments of the disclosure, as shown in FIG. 4, the method may further include step S403.

At step S403, in response to a change in a position of the terminal and a distance between updated position information and position information reported last time being greater than a threshold, the updated position information is reported.

That is, when the position of the terminal is changed, and the distance between the updated position information and the position information reported last time is greater than the threshold, it means that the position of the terminal is changed, and the updated position information may be reported to the network device, to ensure normal communication between the terminal and the network.

Optionally, in response to the change in the position of the terminal and the distance between the updated position information and the position information reported last time being greater than the threshold for a second preset time period, the updated position information is reported to the network device.

That is, in response to the change in the position of the terminal and the distance between the updated position information and the position information reported last time being greater than the threshold for a certain period of time, the terminal reports the updated offset position information to the network device. A timer may be used to determine whether the change in the position of the terminal continues for a period of time. In an implementation, in response to the change in the position of the terminal and the distance between the updated position information and the position information reported last time being greater than the threshold, the timer is started. During the operation of the timer, if the distance between the position of the terminal and the position information reported last time is less than the threshold, the timer is stopped. When the timer is expired, it means that the position of the terminal is changed, and the distance between the updated position information and the position information reported last time is greater than the threshold and lasts for a certain period of time, the terminal may report its own position information again, that is, it may report the updated offset position information to the network device, to ensure the normal communication between the terminal and the network.

In an implementation, when the position of the terminal is changed and the distance between the updated position information and the position information reported last time is greater than the threshold, the updated position information reported to the network device may be obtained by performing calculation using a new offset or using the offset generated when reporting the position at the last time. That is, when the position information reported by the terminal to the network device is the offset position information, if the position of the terminal is changed, the updated position information may be reported to the network device, and the updated position information may be calculated using the new offset generated by the terminal or using the offset generated when reporting the position at the last time.

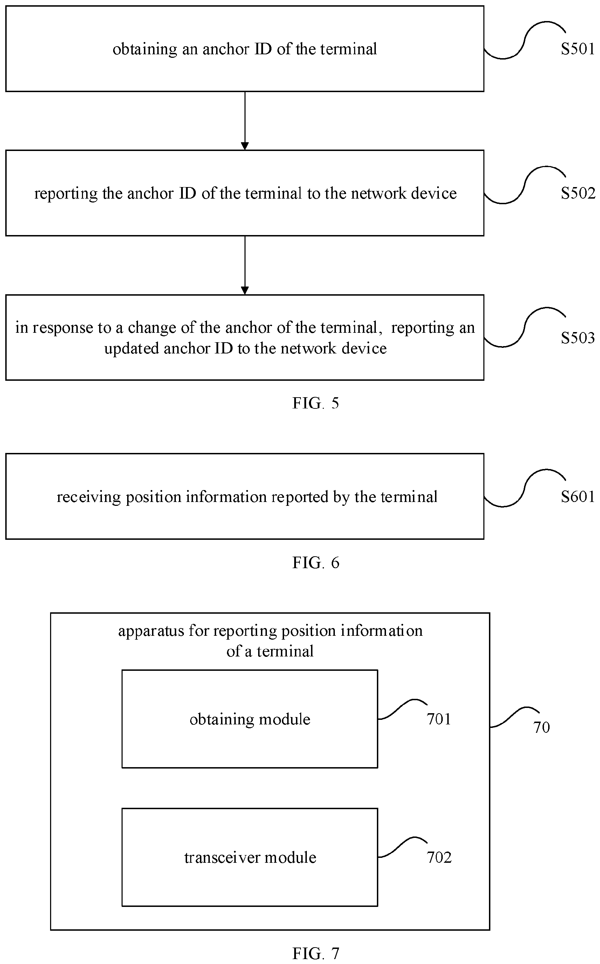

As illustrated in FIG. 5, FIG. 5 is a flowchart of a method for reporting position information of a terminal in a NTN provided by an embodiment of the disclosure. It should be noted that the method of the embodiment of the disclosure may be performed by the terminal. That is, the method of the embodiment of the disclosure may be described from the perspective of the terminal side. The position information in the embodiment of the disclosure includes an anchor ID. That is, in the embodiment of the disclosure, the anchor ID of the terminal is reported to the network device. As shown in FIG. 5, the method may include, but is not limited to, the following steps.

At step S501, an anchor ID of the terminal is obtained.

Optionally, the anchor ID may be obtained by performing calculation using a coordinate of an anchor that is closest to the terminal. As an example, a distance between the terminal and each of at least one anchor is calculated respectively, and, an anchor with a minimum distance is obtained from the at least one anchor. An anchor ID of the anchor with a minimum distance is determined as the anchor ID of the terminal. Optionally, the anchor ID and the anchor coordinate may be sent by the network device to the terminal. For example, when the terminal establishes a connection with the network device, the network device may send an anchor sequence to the terminal. The anchor sequence includes at least one anchor ID and an anchor coordinate corresponding to each anchor ID. The terminal may calculate a distance between the terminal and each anchor coordinate, and determine the anchor ID of the anchor with the minimum distance as the anchor ID of the terminal.

At step S502, the anchor ID of the terminal is reported to the network device.

In the embodiment of the disclosure, step S502 may be realized in any manner in the embodiments of the disclosure, respectively, which is not limited in the embodiments of the disclosure and will not be repeated.

In an implementation, the distance between the terminal and the anchor with the minimum distance may be reported to the network device. That is, the anchor with the minimum distance is determined, the anchor ID of the anchor with the minimum distance is reported to the network device as the position of the terminal, and the distance between the terminal and the anchor with the minimum distance may be reported.

By implementing the embodiments of the disclosure, the calculated ID of the anchor with the minimum distance to the terminal can be used as the position of the terminal to be reported to the network device, so that the network can provide appropriate services depending on different positions of the terminal, to prevent the real and accurate position of the terminal from being leaked, and prevent the privacy of the terminal from being violated.

In order to further ensure normal communication between the terminal and the network, when the position of the terminal is changed, the terminal may report an updated anchor ID to the network device. In some embodiments of the disclosure, as shown in FIG. 5, the method may further include step S503.

At step S503, in response to a change of an anchor of the terminal, an updated anchor ID is reported to the network device.

That is, if the anchor with the minimum distance to the terminal is changed, it indicates that the position of the terminal is changed, the terminal may report the updated anchor ID to the network device, to ensure the normal communication between the terminal and the network.

Optionally, in response to the change of the anchor with the minimum distance to the terminal lasing for a third preset time period, the updated anchor ID is reported to the network device. That is, when the anchor with the minimum distance to the terminal is changed, and the change continues for a period of time, the terminal reports the updated anchor ID to the network device.

A timer may be used to determine whether the change of the anchor with the minimum distance continues for a period of time. In an implementation, the timer is started when the anchor with the minimum distance to the terminal is changed (e.g., from the anchor 1 to the anchor 2). During the operation of the timer, if the anchor with the minimum distance to the terminal is identical to the anchor when it is reported at the last time, the timer is stopped. When the timer is expired, it means that the anchor with the minimum distance to the terminal is changed for a period of time, and the terminal may report its own position information again. That is, the updated anchor ID can be reported to the network device, to ensure the normal communication between the terminal and the network.

It is understood that the above embodiment describes the implementation of the method for reporting position information of a terminal in a NTN of the embodiment of the disclosure from the perspective of the terminal side. The embodiment of the disclosure also provides another method for reporting position information of a terminal in a NTN, and the following will describe the method from the perspective of the network device. With reference to FIG. 6, FIG. 6 is a flowchart of a method for reporting position information of a terminal in a NTN provided by an embodiment of the disclosure. It should be noted that the method may be performed by the network device. That is, the method of the embodiment of the disclosure may be described from the perspective of the network device. As shown in FIG. 6, the method may include, but is not limited to, the following steps.

At step S601, position information reported by the terminal is received.

In the embodiment of the disclosure, the terminal may acquire low-precision position information, and report the acquired position information to the network device, so that the network device can receive the position information reported by the terminal, to provide suitable services for the terminal according to the position information.

In another implementation, the terminal may obtain privacy-removed position information. For example, after obtaining a geographical coordinate through its own positioning system, the terminal processes the geographical coordinate through a privacy-removing process, to obtain the privacy-removed position information. The terminal reports the position information to the network device, so that the network device can receive the position information reported by the terminal and provide appropriate services for the terminal according to the position information.

In order to solve the problem of invasion of privacy of the terminal when the terminal reports its own position, the terminal may report a low-precision position of the terminal. For example, a privacy-removed position may be reported to the network device. As an example, the position information reported to the network device at least includes any of: an area ID, offset position information, and an anchor ID. That is, the terminal may report the area ID of the terminal to the network device, to realize reporting of the position. Alternatively, the terminal may report the offset position information of the terminal to the network device, to realize reporting of the position. Alternatively, the terminal may report the anchor ID of the terminal to the network device, to realize reporting of the position.

It should be noted that the position information reported to the network device may be privacy-removed position information. The area ID, the offset position information, or the anchor ID are examples given to facilitate the understanding of the disclosure. In addition to the area ID, the offset position information, and the anchor ID, the privacy-removed position information may include other types of information, which is not specifically limited in the disclosure.

It should also be noted that, for different types of information reported as the position information to the network device, the way of obtaining the position information may be different. The implementation in which the terminal obtains its own position information can be referred to the description of the embodiments shown in FIGS. 3-5, which is not limited in the embodiments of the disclosure and will not be repeated.

In an implementation, the network device may send control information of the network device to the terminal, and receive the position information reported based on the control information by the terminal. That is, the network device may send the control information to the terminal, so that the terminal reports its own position information based on the control information. In some embodiments, the control information of the network device at least includes any one or more of: a position reporting indication sent by the network device to the terminal via a dedicated signaling; a position reporting indication carried in a system broadcast by the network device; periodically reporting position information configured for the terminal by the network device through a dedicated signaling; and an area range provided by the network device in a system broadcast or a dedicated signaling.

That is, the network device may send the position reporting indication to the terminal via the dedicated signaling, and the terminal reports its own position information after receiving the position reporting indication. Alternatively, the network device carries the position reporting indication in the system broadcast, and the terminal reports the position information after establishing an RRC connection. Alternatively, the network device may configure the terminal, through the dedicated signaling, to report the position information periodically. The cycle may be provided by the network device to the terminal, so that the terminal periodically reports its own position information. Alternatively, the network device provides the area range in the system broadcast or the dedicated signaling. If a position of the terminal is within the area range, the terminal reports the position information, and if the position of the terminal is not within the area range, the terminal does not report the position information. As an example, the area range may be defined by multiple coordinate points or by reference points and a radius, which is not specifically limited in the disclosure.

By implementing the embodiments of the disclosure, the terminal reports the position of the terminal to the network device, so that the network device provides suitable services for the terminal according to the position reported by the terminal. The services may include, for example, selecting a core network node of a local operator, so that normal communication between the terminal and the NTN can be ensured.

In the above embodiments of the disclosure, the method provided by the embodiments of the disclosure is described from the perspectives of the terminal and the network device, respectively. In order to realize each of the above-described functions in the method provided by the embodiments of the disclosure, the terminal and the network device may include a hardware structure and a software module, and realize each of the above-described functions in the form of the hardware structure, the software module, or a combination of the hardware structure and the software module. A certain function of the above functions may be performed in the form of the hardware structure, the software module, or a combination of the hardware structure and the software module.

As illustrated in FIG. 7, FIG. 7 is a block diagram of an apparatus for reporting position information of a terminal in a NTN provided by an embodiment of the disclosure. It should be noted that the apparatus in the embodiment of the disclosure may be a terminal, a device in the terminal, or a device that can be used in combination with the terminal. The apparatus 700 as shown in FIG. 7 may include: an obtaining module 701 and a transceiver module 702. The transceiver module can be a transceiver or a communication interface.

The obtaining module 701 is configured to obtain position information of the terminal. The transceiver module 702 is configured to report the position information to a network device.

In an implementation, the position information includes any one of: an area ID, offset position information, and an anchor ID.

In some embodiments of the disclosure, the obtaining module 701 is configured to: obtain a geographical coordinate of the terminal; obtain a length and a width of an area; and obtain the area ID of the terminal according to a longitudinal length of the geographical coordinate, a latitudinal length of the geographical coordinate, and the length and the width of the area.

In an optional implementation, the obtaining module 701 is configured to: obtain a first value according to the longitudinal length of the geographical coordinate and the length of the area; obtain a second value according to the latitudinal length of the geographical coordinate and the width of the area; and obtain the area ID of the terminal according to the first value and the second value.

Optionally, the geographical coordinate is a relative geographical coordinate, and the obtaining module 701 is configured to: obtain an absolute geographical coordinate of the terminal; and obtain a relative geographical coordinate of the terminal with respect to an origin according to the absolute geographical coordinate, in which the origin is an absolute geographical coordinate configured by the network device.

In an implementation, the transceiver module 702 is configured to: in response to a change in the area ID of the terminal, report an updated area ID to the network device.

In an optional implementation, the transceiver module 702 is configured to: in response to the change in the area ID of the terminal lasting for a first preset time period, report the updated area ID to the network device.

In some embodiments of the disclosure, the obtaining module 701 is configured to: generate a first offset angle and a first offset length; and obtain the offset position information of the terminal according to the first offset angle and the first offset length based on a polar coordinate system by taking an absolute geographical position of the terminal as a pole.

In an implementation, the obtaining module 701 is configured to: generate a first random angle between a first angle and a first maximum angle, and determine the first random angle as the first offset angle; and generate a first random length between a first length and a first maximum length, and determine the first random length as the first offset length.

In another implementation, the obtaining module 701 is configured to: generate a second offset angle; and obtain the offset position information of the terminal according to the second offset angle and a preset second offset length based on a polar coordinate system by taking an absolute geographical position of the terminal as a pole.

Optionally, the obtaining module 701 is configured to: generate a second random angle between a second angle and a second maximum angle, and determine the second random angle as the second offset angle.

In another implementation, the obtaining module 701 is configured to: generate an offset longitudinal length and an offset latitudinal length; and obtain the offset position information of the terminal according to the offset longitudinal length, the offset latitudinal length and a geographical coordinate of the terminal.

Optionally, the obtaining module 701 is configured to: generate a second random length between a second length and a second maximum length, and determine the second random length as the offset longitudinal length; and generate a third random length between a third length and a third maximum length, and determine the third random length value as the offset latitudinal length.

In an implementation, the transceiver module 702 is configured to: in response to a change in a position of the terminal and a distance between updated position information and position information reported last time being greater than a threshold, report the updated position information.

Optionally, the transceiver module 702 is configured to: in response to the change in the position of the terminal and the distance between the updated position information and the position information reported last time being greater than the threshold for a second preset time period, report the updated position information to the network device.

In some embodiments of the disclosure, the obtaining module 701 is configured to: calculate a distance between the terminal and each of at least one anchor, respectively; obtain an anchor with a minimum distance to the terminal from the at least one anchor; and determine an anchor ID of the anchor with the minimum distance to the terminal as the anchor ID of the terminal.

In an implementation, the transceiver module 702 is configured to: report a distance between the anchor with the minimum distance to the terminal and the terminal to the network device.

Optionally, the transceiver module 702 is configured to: in response to a change of the anchor with the minimum distance to the terminal, report an updated anchor ID to the network device.

Optionally, the transceiver module 702 is configured to: in response to the change of the anchor with the minimum distance to the terminal lasing for a third preset time period, report the updated anchor ID to the network device.

In some embodiments of the disclosure, the transceiver module 702 is configured to: report the position information to the network device based on control information of the network device; in which the control information of the network device includes any one or more of: a position reporting indication sent by the network device to the terminal via a dedicated signaling; a position reporting indication in a system broadcast carried by the network device; periodically reporting position information configured for the terminal by the network device through a dedicated signaling; and an area range provided by the network device in a system broadcast or a dedicated signaling.

With respect to the apparatus in the above embodiments, the specific manner in which each module performs an operation has been described in detail in the method embodiments, and will not be described in detail herein.

By implementing the embodiments of the disclosure, the terminal reports it own position to the network device, so that the network device provides suitable services for the terminal according to the position reported by the terminal. The services may include, for example, selecting a core network node of a local operator, so that normal communication between the terminal and the NTN can be ensured.

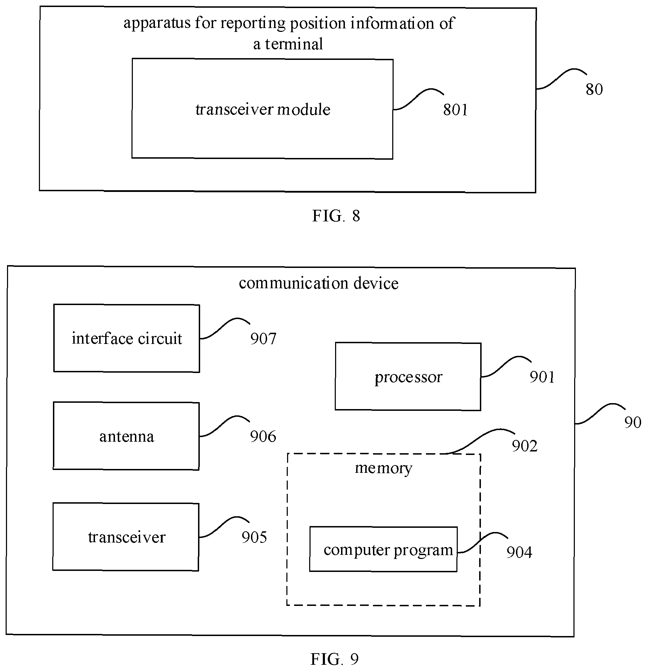

As illustrated in FIG. 8, FIG. 8 is a structural diagram of an apparatus for reporting position information of a terminal in a NTN provided by an embodiment of the disclosure. It should be noted that the apparatus of the embodiment of the disclosure may be a network device, a device in the network device, or a device capable of being used in combination with the network device. The apparatus 800 shown in FIG. 8 may include: a transceiver module 801. The transceiver module may be a transceiver or a communication interface.

The transceiver module 801 is configured to receive position information reported by the terminal.

In an implementation, the position information includes any one of: an area ID, offset position information, and an anchor ID.

In some embodiments of the disclosure, the transceiver module 801 is configured to: send control information of the network device to the terminal; receive position information reported by the terminal based on the control information, in which the control information of the network device at least includes any one or more of: a position reporting indication sent by the network device to the terminal via a dedicated signaling; a position reporting indication carried in a system broadcast by the network device; periodically reporting position information configured for the terminal by the network device through a dedicated signaling; and an area range provided by the network device in a system broadcast or a dedicated signaling.

With respect to the apparatus in the above embodiments, the specific manner in which each module performs operations has been described in detail in the method embodiments and will not be described in detail herein.

By implementing the embodiment of the disclosure, the terminal reports its own position to the network device, so that the network device can provide suitable services for the terminal according to the position reported by the terminal. The services may include, for example, selecting a core network node of a local operators, so that normal communication between the terminal and the NTN can be ensured.

As illustrated in FIG. 9, FIG. 9 is a schematic diagram of a communication device 90 provided by an embodiment of the disclosure. The communication device 90 may be a network device or a terminal. A form of the communication device may be a chip, a chip system or a processor that supports the terminal to realize the above-described methods. The device may be used to realize the methods described in the above method embodiments, which may refer to the description of the above-described method embodiments.

The communication device 90 may include one or more processors 901. The processor 901 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a central unit (CU), or a distributed unit (DU)), executing computer programs, and processing data of the computer programs.

Optionally, the communication device 90 may include one or more memories 902 on which computer programs 904 may be stored. The processor 901 executes the computer programs 904 to cause the communication device 90 to perform the methods described in the above method embodiments. Optionally, the memory 902 may also store data. The communication device 90 and the memory 902 may be provided separately or may be integrated together.

Optionally, the communication device 90 may also include a transceiver 905 and an antenna 906. The transceiver 905 may be referred to as a transceiver unit, a transceiver machine, or a transceiver circuit, for realizing a transceiver function. The transceiver 905 may include a receiver and a transmitter. The receiver may be referred to as a receiving machine or a receiving circuit, for realizing a receiving function. The transmitter may be referred to as a transmitter machine or a transmitting circuit, for realizing a transmitting function.

Optionally, the communication device 90 may also include one or more interface circuits 907. The interface circuits 907 are used to receive code instructions and transmit them to the processor 901. The processor 901 runs the code instructions to cause the communication device 90 to perform the method described in the method embodiments.

The communication device 90 is a terminal. The processor 901 is configured to perform step S201 in FIG. 2, step S301 in FIG. 3, step S401 in FIG. 4, and step S501 in FIG. 5. The transceiver 905 is configured to perform step S202 in FIG. 2, steps S302 and S303 in FIG. 3, steps S402 and S403 in FIG. 4, and steps S502 and S503 in FIG. 5.

The communication device 90 is a network device. The transceiver 905 is configured to perform step S601 in FIG. 6.

In an implementation, the processor 901 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the memory 902 may store a computer program 904. When the computer program 904 is executed on the processor 901, the communication device 90 is caused to perform the methods described in the method embodiments above. The computer program 904 may be solidified in the processor 901, and in such case the processor 901 may be implemented by hardware.

In an implementation, the communication device 90 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal, but the scope of the communication device described in the disclosure is not limited thereto, and the structure of the communication device may not be limited by FIG. 9. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

It is understandable by those skilled in the art that various illustrative logical blocks and steps listed in the embodiments of the disclosure may be implemented by electronic hardware, computer software, or a combination of both. Whether such function is implemented by hardware or software depends on the design requirements of the particular application and the entire system. Those skilled in the art may, for each particular application, use various methods to implement the described function, but such implementation should not be construed as being beyond the scope of protection of the embodiments of the disclosure.

The embodiments of the disclosure also provide a communication system. The system includes the apparatus in the embodiment of FIG. 7 and the apparatus in the embodiment of FIG. 8. Or, the system includes the communication device served as a terminal and the communication device served as a network device in the aforementioned embodiment of FIG. 9.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using the software, the above embodiments may be implemented, in whole or in part, in the form of a computer program product. The computer program product includes one or more computer programs. When loading and executing the computer program on a computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not used to limit the scope of the embodiments of the disclosure, and not to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", are used to distinguish different technical features of the type, the technical features described using the "first", "second", and "third", do not indicate any order of precedence or magnitude.

The correspondences shown in the tables in the disclosure can be configured or predefined. The term "predefine" in this disclosure may be understood as define, predefine, store, pre-store, pre-negotiate, pre-configure, solidify, or pre-fire.

Those skilled in the art may realize that the units and steps of the various examples described in combination with the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems and apparatuses described above can be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for reporting position information of a terminal in a Non-Territorial Network (NTN), performed by the terminal, comprising:
obtaining position information of the terminal; and
reporting the position information to a network device.

2. The method of claim 1, wherein the position information comprises any one of:
an area identifier (ID), offset position information, or an anchor ID.

3. The method of claim 2, wherein obtaining the area ID of the terminal comprises:
obtaining a geographical coordinate of the terminal;
obtaining a length and a width of an area; and
obtaining the area ID of the terminal according to a longitudinal length of the geographical coordinate, a latitudinal length of the geographical coordinate, and the length and the width of the area.

4. The method of claim 3, wherein obtaining the area ID of the terminal according to the longitudinal length of the geographical coordinate, the latitudinal length of the geographical coordinate, and the length and width of the area comprises:
obtaining a first value according to the longitudinal length of the geographical coordinate and the length of the area;
obtaining a second value according to the latitudinal length of the geographical coordinate and the width of the area; and
obtaining the area ID of the terminal according to the first value and the second value.

5. The method of claim 3 or 4, wherein the geographical coordinate is a relative geographical coordinate, and obtaining the geographical coordinate of the terminal comprises:
obtaining an absolute geographical coordinate of the terminal; and
obtaining a relative geographical coordinate of the terminal with respect to an origin according to the absolute geographical coordinate, wherein the origin is an absolute geographical coordinate configured by the network device.

6. The method of any one of claims 2-5, further comprising:
in response to a change in the area ID of the terminal, reporting an updated area ID to the network device.

7. The method of claim 6, wherein in response to the change in the area ID of the terminal, reporting the updated area ID to the network device comprises:
in response to the change in the area ID of the terminal lasting for a first preset time period, reporting the updated area ID to the network device.

8. The method of claim 2, wherein obtaining the offset position information of the terminal comprises:
generating a first offset angle and a first offset length; and
obtaining the offset position information of the terminal according to the first offset angle and the first offset length based on a polar coordinate system by taking an absolute geographical position of the terminal as a pole.

9. The method of claim 8, wherein generating the first offset angle and the first offset length comprises:
generating a first random angle between a first angle and a first maximum angle, and determining the first random angle as the first offset angle; and
generating a first random length between a first length and a first maximum length, and determining the first random length as the first offset length.

10. The method of claim 2, wherein obtaining the offset position information of the terminal comprises:
generating a second offset angle; and
obtaining the offset position information of the terminal according to the second offset angle and a preset second offset length based on a polar coordinate system by taking an absolute geographical position of the terminal as a pole.

11. The method of claim 10, wherein generating the second offset angle comprises:
generating a second random angle between a second angle and a second maximum angle, and determining the second random angle as the second offset angle.

12. The method of claim 2, wherein obtaining the offset position information of the terminal comprises:
generating an offset longitudinal length and an offset latitudinal length; and
obtaining the offset position information of the terminal according to the offset longitudinal length, the offset latitudinal length and a geographical coordinate of the terminal.

13. The method of claim 12, wherein generating the offset longitudinal length and the offset latitudinal length comprises:
generating a second random length between a second length and a second maximum length, and determining the second random length as the offset longitudinal length; and
generating a third random length between a third length and a third maximum length, and determining the third random length value as the offset latitudinal length.

14. The method of any one of claims 8-13, further comprising:
in response to a change in a position of the terminal and a distance between updated position information and position information reported last time being greater than a threshold, reporting the updated position information.

15. The method of claim 14, wherein in response to the change in the position of the terminal and the distance between the updated position information and the position information reported last time being greater than the threshold, reporting the updated position information comprises:
in response to the change in the position of the terminal and the distance between the updated position information and the position information reported last time being greater than the threshold for a second preset time period, reporting the updated position information to the network device.

16. The method of claim 2, wherein obtaining the anchor ID of the terminal comprises:
calculating a distance between the terminal and each of at least one anchor, respectively;
obtaining an anchor with a minimum distance to the terminal from the at least one anchor; and
determining an anchor ID of the anchor with the minimum distance as the anchor ID of the terminal.

17. The method of claim 16, further comprising:
reporting a distance between the anchor with the minimum distance and the terminal to the network device.

18. The method of claim 16 or 17, further comprising:
in response to a change of the anchor with the minimum distance to the terminal, reporting an updated anchor ID to the network device.

19. The method of claim 18, wherein in response to the change of the anchor with the minimum distance to the terminal, reporting the updated anchor ID to the network device comprises:
in response to the change of the anchor with the minimum distance to the terminal lasing for a third preset time period, reporting the updated anchor ID to the network device.

20. The method of claim 1, wherein reporting the position information to the network device comprises:
reporting the position information to the network device based on control information of the network device; wherein
the control information of the network device comprises any one or more of:
a position reporting indication sent by the network device to the terminal via a dedicated signaling;
a position reporting indication carried in a system broadcast by the network device;
periodically reporting position information configured for the terminal by the network device through a dedicated signaling; and
an area range provided by the network device in a system broadcast or a dedicated signaling.

21. A method for reporting position information of a terminal in a Non-Territorial Network (NTN), performed by a network device, comprising:
receiving low-precision position information reported by the terminal.

22. The method of claim 21, wherein the low-precision position information comprises any of:
an area ID, offset position information, and an anchor ID.

23. The method of claim 21 or 22, wherein receiving the position information reported by the terminal comprises:
sending control information of the network device to the terminal; and
receiving position information reported by the terminal based on the control information, wherein the control information of the network device comprises any one or more of:
a position reporting indication sent by the network device to the terminal via a dedicated signaling;
a position reporting indication carried in a system broadcast by the network device;
periodically reporting position information configured for the terminal by the network device through a dedicated signaling; or
an area range provided by the network device in a system broadcast or a dedicated signaling.

24. An apparatus for reporting position information of a terminal in a Non-Territorial Network (NTN), applied to the terminal, comprising:
an obtaining module, configured to obtain position information of the terminal; and
a transceiver module, configured to report the position information to a network device.

25. An apparatus for reporting position information of a terminal in a Non-Territorial Network (NTN), applied to a network device, comprising:
a transceiver module, configured to receive low-precision position information reported by the terminal.

26. A communication device, comprising a processor and a memory having computer programs stored thereon that, when executed by the processor, cause the device to implement the method of any one of claims 1-20.

27. A communication device, comprising a processor and a memory having computer programs stored thereon that, when executed by the processor, cause the device to implement the method of any one of claims 21-23.

28. A communication device, comprises: a processor and an interface circuit, wherein
the interface circuit is configured to receive code instructions and transmit the code instructions to the processor; and
the processor is configured to run the code instructions to perform the method of any one of claims 1-20.

29. A communication device, comprises: a processor and an interface circuit, wherein
the interface circuit is configured to receive code instructions and transmit the code instructions to the processor; and
the processor is configured to run the code instructions to perform the method of any one of claims 21-23.

30. A computer-readable storage medium for storing instructions, wherein when the instructions are executed, the method of any one of claims 1-20 is implemented.

31. A computer-readable storage medium for storing instructions, wherein when the instructions are executed, the method of any one of claims 21-23 is implemented.
